# EUROPEAN PATENT APPLICATION

(11) **EP 2 506 131 A2**
(43) Date of publication of application: **03.10.2012**
(21) Application number: 11171478.8
(22) Date of filing: 27.06.2011
(51) Int. Cl.: G06F 3/048, G06F 3/033, G06F 3/038

(54) **Mouse with switchable operation modes and method thereof**

(30) Priority: 29.03.2011 TW 100110825
(71) Applicant: Giga-Byte Technology, Taipei County 231 (TW)
(72) Inventor: Lin, Yin-Yu, 231 Hsin Tien (TW); Huang, Haw-Kae, 231 Hsin Tien, New Taipei City (TW); Shih, Po-Jen, 231 Hsin Tien (TW)
(74) Representative: Schwerbrock, Florian

(57) **Abstract**

The present disclosure is a mouse with switchable operation modes and method thereof. The mouse is applicable to perform the cursor control function under normal operation. A switch signal is generated to switch a firmware that is stored in a microprocessor. Operation modes are adjusted according to the switch signal. The method includes the following steps. A first switch generates a first switch signal. A MCU executes a first logic when the MCU is triggered by the first switch signal. The mouse executes the page scroll function according to the first logic and a displacement signal when the MCU receives the displacement signal. By accessing the mouse with switchable operation modes and the method, it is advantageous to save the space of a prior mouse and meanwhile profiting users' convenience.

## Description

### BACKGROUND OF THE INVENTION

### Field of Invention

This invention is relative to a mouse with switchable operation modes and method thereof, in particular, relative to switch the firmware stored in a microprocessor by a switch signal.

### Related Art

Mouse is one kind of the input equipment of the computer peripherals. According to the popularity of graphic operation system, the mouse is the basic input equipment of the computer. The merits of the mouse include controlling the cursor of the window by moving the mouse, selecting the command from the window command list by clicking the mouse and other operation of the application programs, like document process, game and web page browsing.

Generally speaking, there are several types of the mouse. There are mechanical mouse, optical machinery mouse and optical mouse classified by different position principles. There are infrared mouse and laser mouse classified by different light source. There is another classification by the number of the button of the mouse, for example, single button mouse (like the mouse of MAC system), standard two buttons, three buttons with scroll wheel or multiplex mouse with more than three buttons.

The former mouse is popular with the most users because they are light, endurable, reasonable price and easy to apply for internet. The mouse often configures a scroll wheel for user to browse the web page. User browses the web page in vertical direction by scrolling the wheel.

However, according to more and more progressive technology, user asks for the electrical products with more light weight and slim size. The scroll wheel occupies too large space of the mouse body to satisfy the trend of slim product. It is necessary to improve the present scroll function of the scroll wheel to fit the requirement of slim mouse in the future application.

In addition, the scroll method of the present mouse is dependent on the scroll wheel of the mouse body. When the web page is long, user has to scroll the wheel repeatedly. It is an inconvenience for user's application.

### SUMMARY OF THE INVENTION

This invention provides a mouse with switchable operation modes and method thereof to fit the requirement of slim mouse with original function. The mouse with switchable operation modes and method thereof automatically switch the operation modes of the mouse by a switch signal in this invention.

This invention provides a mouse with switchable operation modes and method thereof to fit the requirement of slim mouse with original function. The mouse with switchable operation modes and method thereof automatically switch the operation modes of the mouse by a switch signal in this invention.

This invention discloses a method to switch the operation modes of a mouse. The method furthermore includes the following steps. A second switch produces a second switch signal to trigger a microprocessor to execute a second logic. When the microprocessor receives a displacement signal, the mouse executes a speed page scroll function according to the displacement signal and the second logic.

This invention discloses a mouse with switchable operation modes. The mouse controls the cursor under normal operation. The mouse includes a first switch, a microprocessor and a sensor. The first switch optionally produces a first switch signal. The microprocessor electrically connects with the first switch and the microprocessor executes a first logic after receiving the first switch signal. The sensor electrically connects with the microprocessor. The sensor produces a displacement signal according to the moving path of the mouse. The sensor transmits the displacement signal to the microprocessor. When the microprocessor receives the displacement signal, the mouse executes the page scroll function according to the displacement signal and the first logic.

The mouse with switchable operation modes and switch method thereof of this invention produces the first switch signal by the first switch to switch a firmware stored in the microprocessor. The operation mode of the mouse is switchable automatically between the cursor control function and the page scroll function by the trigger of the first switch signal.

The mouse with switchable operation modes and switch method thereof of this invention saves the space of the scroll wheel. The mouse is switchable between the cursor control function and the page scroll function by the trigger of the first switch signal.

Further objects and advantages are apparent in the drawings and in the detailed description which follows.

### BRIEF DESCRIPTION OF THE DRAWINGS

Fig.1 illustrates the flow chart of an method of switching the operation modes of a mouse of one embodiment of the present disclosure.
Fig.2 illustrates the block chart of a mouse of one embodiment of the present disclosure.
Fig.3 illustrates the block chart of a mouse of one embodiment of the present disclosure.
Fig.4 illustrates the flow chart of a method of switching the operation modes of a mouse of one embodiment of the present disclosure.

### DETAIL DESCRIPTION OF THE INVENTION

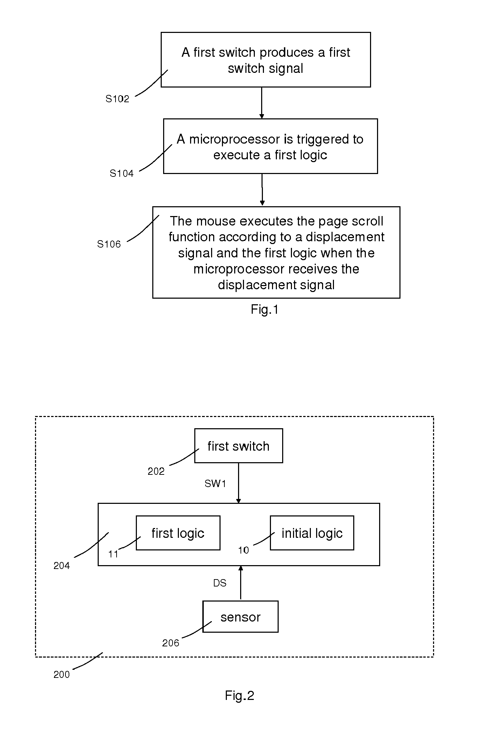

Fig.1 illustrates a flow chart of an embodiment according to the present disclosure. The flow chart describes a switch method of the operation modes of a mouse. The switch method in this disclosure is applicable to the mouse which utilizes the cursor control function and the page scroll function. The mouse adopting the method disclosed in this invention could execute both the cursor control function and the page scroll function without the scroll wheel. The switch method of the operation modes of the mouse in this invention mainly includes the following steps.
Step S102: A first switch produces a first switch signal;
Step S104: A microprocessor is triggered to execute a first logic; and
Step S106: The mouse executes the page scroll function according to a displacement signal and the first logic when the microprocessor receives the displacement signal.

Fig.2 illustrates a block chart of an embodiment of the mouse according to the present disclosure. A mouse 200 includes a first switch 202, a microprocessor 204 and a sensor 206. According to the embodiment of this disclosure, the type of the mouse 200 includes but not limited to the optical mouse and mechanical. The mouse 200 executes the cursor control function under normal operation. In other words, user could control the cursor of the window by moving the mouse 200. The first switch 202 is disposed on the housing of the mouse 200. The first switch 202 includes either a physical button or any virtual button with touch control function. The first switch 202 is not limited to the embodiments of the present disclosure.

The first switch 202 electrically connects with the microprocessor 204 and the first switch 202 optionally produces a first switch signal SW1. There is an initial logic 10 and a first logic 11 temporarily saved in the microprocessor 204. In this embodiment, the microprocessor 204 executes the initial logic 10 normally before receiving the first switch signal SW1. The microprocessor 204 executes the first logic 11 after receiving the first switch signal SW1 when the first switch 202 produces the first switch signal SW1 to enable or trigger the microprocessor 204.

The sensor 206 electrically connects with the microprocessor 204 and the sensor 206 transmits a corresponding displacement signal DS to the microprocessor 204 according to the moving path of the mouse. In one embodiment, when user moves the mouse 200, which is an optical type, to produce a moving path. The sensor 206 detects the path of the refraction light in the mouse body 200, thereafter the sensor 206 produces the displacement signal DS. For example, the sensor 206 receives the refraction change of the light after refraction (Doppler Effect) to judge the movement of the mouse. Or the sensor 206 collects the pattern produced by the refraction light and the sensor 206 judges the movement of the mouse by checking the pattern.

In the other embodiments, a sensor 206 produces a displacement signal DS by detecting the trackball under a mechanical mouse 200. The present disclosure is not limited to the type of the mouse 200 and the detection mechanism of the sensor 206. Any sensor which produces the displacement signal DS according to the moving path of the mouse 200 falls within the scope of the present disclosure. For example, the sensor 206 could be a CMOS or a CCD but not limited to these two types.

Generally speaking, a method for capturing a displacement signal DS by a microprocessor 204 is to read the surface quality value (SQUAL) of the surface that a mouse 200 is placed on. The microprocessor 204 calculates the average of the surface quality value to obtain the displacement signal DS. For example, a sensor 206 collects the light from the bottom of the mouse 200 and forms the pattern. Thereafter, a digital signal processing chip (not shown) inside the microprocessor 204 detects the characteristics of the pattern and calculates the surface quality value according to the quantity of these characteristics. By this way, the displacement signal DS is corresponding to the displacement per unit time of the mouse 200.

The microprocessor 204 executes an initial logic 10 under normal condition (before receiving a first switch signal SW1). When the microprocessor 204 receives the displacement signal DS, the mouse 200 executes the cursor control function according to the initial logic 10 and the displacement signal DS.

According to one embodiment of the present disclosure, step S102 describes the process that a first switch 202 produces a first switch signal SW1 to enable (or trigger) a microprocessor 204. Step S104 describes the process that a executable firmware stored in the microprocessor 204 is switched from an initial logic 10 to a first logic 11 by the first switch signal SW1. Step S106 describes that the operation mode of a mouse 200 is switched to the page scroll function according to a displacement signal DS and the first logic 11 when the microprocessor 204 receives the displacement signal DS.

For the requirement of the user browsing a long page, there is a threshold value saved in a microprocessor 204 according to one embodiment of this invention. When the displacement per unit time of a mouse 200 exceeds the threshold value, the mouse 200 executes a speed page scroll function after comparison done by the microprocessor 204. By this way, the method of switching the operation mode of the mouse in the present disclosure could be further applied for speedy browsing. The setting of the threshold value is dependent on the design or application requirement.

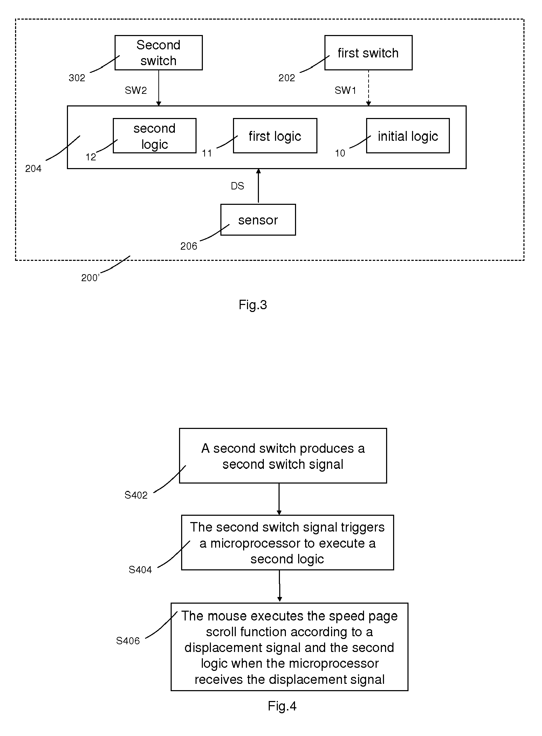

Fig.3 illustrates a block chart of a mouse with switchable operation modes of an embodiment of the present disclosure. The difference from the former mouse is that a mouse 200' further includes a second switch 302 and a second logic 12 saved in a microprocessor 204 of the mouse 200'. A first switch 202 and the second switch 302 are disposed on the housing of the mouse 200'. The first switch 202 and the second switch 302 both include either the physical button or other virtual button with touch control function.

Fig.4 illustrates a flow chart of a method of switching the operation modes of a mouse of an embodiment of the present disclosure. The method of switching the operation mode of the mouse includes the following steps.
Step S402: A second switch produces a second switch signal;
Step S404: The second switch signal triggers a microprocessor to execute a second logic; and
Step S406: The mouse executes the speed page scroll function according to a displacement signal and the second logic when the microprocessor receives the displacement signal.

A second switch 302 electrically connects with a microprocessor 204. The step S402 describes the process that the second switch 302 optionally produces a second switch signal SW2 and transmits the second switch signal SW2 to the microprocessor 204. The step S404 describes the process that the microprocessor 204 switches the executable firmware to a second logic 12 when the microprocessor 204 receives the second switch signal SW2. The Step S406 describes the process that a mouse 200' executes the speed page scroll function according to the second logic 12 and a displacement signal DS received by the microprocessor 204 when the second switch 302 produces a second switch signal SW2 to trigger the microprocessor 204.

According to another embodiment of this invention, a executable firmware saved in a microprocessor 204 includes an initial logic 10, a first logic 11 and a second logic 12. The executable firmware could be compiled by program designer in advance. These logics could be further rewritten and controlled by the software of the operation system of the mouse to fit the purpose of the human interface device (HID) in the actual application.

In other words, there are different programs temporarily saved in the initial logic 10, the first logic 11 and the second logic 12. End user could select each one of them as an executable firmware by a microprocessor 204 and the microprocessor 204 is rewritten and controlled by the software of the operation system. By this way, user determines the operation mode of the mouse and switches the operation mode between the cursor control function, page scroll function and the speed page scroll function.

In order to enlarge the application range of the mouse of the present disclosure , user also could add other logic in the executable firmware according to the teaching of the present disclosure. User switches the operation modes by a specific switch signal.

To sum up, the present disclosure discloses a mouse with switchable operation mode and a method thereof. The present disclosure saves the space of the scroll wheel of the mouse and switches the operation mode to the corresponding operation mode by a switch signal. The present disclosure enhances the convenience of application and achieves the purpose of light and slim products.

Secondly, the former mouse with switchable operation modes and the method thereof in the present disclosure further achieves the speed page scroll function and the purpose of human interface device (HID) by setting a threshold vale in the microprocessor or by setting the second switch to produce a second switch signal.

While the preferred embodiment of the invention has been described, it will be understood that numerous modifications and changes will occur to those skilled in the art. It is therefore intended by the appended claims to define the true scope of the invention.

## Claims

1. A method switching operation modes of a mouse and being applicable to the mouse with a cursor control function and a page scroll function; wherein the mouse executes the cursor control function in normal operation, the mouse comprises a microprocessor, and the operation modes are switched by the microprocessor; the method comprising the following steps:
producing a first switch signal by a first switch;
executing a first logic by triggering the microprocessor; and
executing the page scroll function according to a displacement signal and the first logic by the mouse when the microprocessor receives the displacement signal.

2. The method of claim 1, further comprising the following steps before the step of producing the first switch signal by the first switch :
executing an initial logic normally by the microprocessor; and
executing the cursor control function according to the initial logic and the displacement signal by the mouse when the microprocessor receives the displacement signal.

3. The method of claim 2, wherein the initial logic and the first logic are saved in the firmware of the microprocessor.

4. The method of claim 1, wherein the step of capturing displacement signal further comprises the following steps:
reading a surface quality value (SQUAL) of a surface continuously by the microprocessor and the surface which is the mouse placed on; and
obtaining the displacement signal by calculating the average of the surface quality value per unit time by the microprocessor, wherein the displacement signal is corresponding to the displacement of the mouse per unit time.

5. The method of claim 4, wherein the mouse executes a speed page scroll function when the displacement per unit time exceeds a threshold value.

6. The method of claim 1 further comprising the following steps:
producing a second switch signal by a second switch;
executing a second logic by triggering the microprocessor; and
executing the speed page scroll function according to the second logic and the displacement signal by the mouse when the microprocessor receives the displacement signal.

7. A mouse with switchable operation modes and executing a cursor control function, the mouse comprising:
a first switch optionally producing a first switch signal;
a microprocessor electrically connecting with the first switch, receiving the first switch signal, and executing a first logic; and
a sensor electrically connecting with the microprocessor and transmitting a displacement signal to the microprocessor according to the moving path of the mouse;
wherein the mouse executes the page scroll function according to the first logic and the displacement signal when the microprocessor receives the displacement signal.

8. The mouse of claim 7, wherein the microprocessor executes an initial logic before receiving the first switch signal, and the mouse executes the cursor control function according to the initial logic and the displacement signal.

9. The mouse of claim 7, wherein the displacement signal is generated corresponding to the displacement of the mouse per unit time, and the mouse executes a speed page scroll function when the displacement per unit time exceeds a threshold value.

10. The mouse of claim 7, wherein the mouse further comprises a second switch electrically connecting with the microprocessor, the second switch optionally produces a second switch signal, the second switch signal triggers the microprocessor to execute a second logic, the microprocessor receives the second logic and the displacement signal, and the mouse executes a speed page scroll function according to the second logic and the displacement signal.
